# DEMANDE DE BREVET EUROPEEN

(11) **EP 1 284 547 A1**
(43) Date de publication de la demande: **19.02.2003**
(21) Numéro de dépôt: 02292025.0
(22) Date de dépôt: 12.08.2002
(51) Int. Cl.: H04B 10/08

(54) **Procédé et dispositif de sécurisation d'un système de transmission optique**

(30) Priorité: 16.08.2001 FR 0110850
(71) Demandeur: ALCATEL, 75008 Paris (FR)
(72) Inventeur: Labrunie, Laurent, 75018 Paris (FR); Brandon, Eric, 75015 Paris (FR); Le Roux, Patrice, 91140 Villebon sur Yvette (FR); Piriou, Laurence, 91600 Savigny-sur-Orge (FR); Uhel, Roland, 29121 Clohars Carnoet (FR); Buet, Laurence, 75014 Paris (FR); Havard, Vincent, 94600 Choisy le Roi (FR); Boubal, François, 75013 Paris (FR)
(74) Mandataire: Lamoureux, Bernard

(57) **Abrégé**

La présente invention concerne un procédé de sécurisation d'un système de transmission optique, ce système comprenant :
- des moyens d'émission (11) d'un signal optique utile (Sᵤ)
- des moyens de transmission, contenant une fibre optique de transmission (12), d'un signal optique contenant le signal optique utile (Sᵤ) ainsi que du bruit optique, pour former un signal optique dit transmis
- des moyens de prélèvement d'une partie du signal optique transmis, dit signal optique de surveillance
- des moyens d'analyse de la puissance du signal optique de surveillance pour en déduire une rupture de la fibre optique de transmission (12) en fonction de la puissance du signal optique de surveillance,

Ce procédé est caractérisé par le fait qu'il consiste à isoler au sein du signal optique de surveillance, un premier signal ne contenant que le bruit d'une part, et un deuxième signal contenant à la fois le bruit et le signal utile d'autre part, et à comparer la puissance de ces deux signaux, pour en déduire une rupture de la fibre optique de transmission (12) si le rapport de la puissance du deuxième signal sur la puissance du premier signal est sensiblement égal à 1.

## Description

La présente invention concerne un procédé de sécurisation d'un système de transmission optique, un dispositif pour la mise en oeuvre de ce procédé ainsi qu'un système de transmission optique incorporant un tel dispositif, et plus particulièrement, un système de transmission optique sous-marin ainsi sécurisé.

Dans les systèmes optiques sous-marins actuels, des fibres optiques dites de ligne transmettent les signaux lumineux utiles (c'est-à-dire contenant les informations utiles telles que la voix, les données, les informations de contrôle, etc...) sur des distances parfois très longues entre deux dispositifs de régénération optique. Pour compenser l'atténuation des signaux sur ces longues distances, ces systèmes de transmission utilisent des lasers de pompe de très forte puissance, de l'ordre du Watt.

Ces lasers de pompe sont utilisés soit pour l'amplification par fibre optique dopée à l'erbium, soit pour l'amplification Raman distribuée.

Dans le cas de l'amplification à fibre optique dopée à l'erbium, une portion de fibre optique de ligne est remplacée à intervalles réguliers le long de la liaison optique par une portion de fibre optique dopée à l'erbium ; ces portions de fibre optique dopée à l'erbium se trouvent ainsi en général sous la mer. Les ions d'erbium y sont excités par l'envoi d'un signal dit de pompe au moyen d'un laser de pompe. L'interaction des photons du signal optique à transmettre avec les ions d'erbium excités conduit à l'amplification du signal lumineux.

Dans le cas de l'amplification Raman distribuée, l'utilisation de portions de fibre optique dopée à l'erbium n'est pas nécessaire, et l'envoi d'un signal de pompe contra-propagatif par exemple permet d'amplifier le signal optique utile par diffusion Raman stimulée.

Dans les deux cas, le laser de pompe, au lieu d'être situé au voisinage des zones où l'amplification doit avoir lieu, c'est-à-dire sous la mer, est déporté à distance de ces dernières, en général au sein des dispositifs de régénération du signal lumineux. Les distances séparant les zones où le signal doit être amplifié des dispositifs de régénération peuvent atteindre plusieurs dizaines de kilomètres, ce qui explique notamment pourquoi la puissance de ces lasers doit être très élevée.

Compte tenu du très faible diamètre du coeur des fibres optiques (de l'ordre de 9 µm), il en résulte au sein de ces dernières une très forte concentration d'énergie. Or, au niveau des dispositifs de régénération, qui se trouvent à terre, l'intervention humaine est souvent nécessaire pour effectuer des raccordements, des dérivations, des réparations, etc... On comprend donc que, lorsqu'une fibre est rompue au voisinage d'un dispositif de régénération, c'est-à-dire là où la puissance optique est la plus élevée, par exemple suite à des travaux intervenus au voisinage de ce dernier, il existe un danger très important pour les yeux des personnes ayant à intervenir sur ces dispositifs. Du fait de la très forte concentration de l'énergie transportée par la fibre au voisinage du laser de pompe, l'onde lumineuse incidente sur l'oeil humain peut causer des dommages irréparables.

Un procédé connu pour éviter ce genre de problèmes est fondé sur le principe de la perte de signal (LOS pour Loss Of Signal en anglais). Il consiste à utiliser un coupleur optique placé sur la fibre de ligne au voisinage ou à distance de la sortie du laser de pompe et couplant une partie du signal utile transmis dans une fibre optique annexe utilisée pour la surveillance. La fibre optique annexe transmet ce signal prélevé à un dispositif d'analyse, situé par exemple au niveau d'une interface du système de transmission telle qu'un dispositif d'émission/réception, commandant le laser de pompe. Si ce dispositif d'analyse constate que la puissance du signal prélevé est sensiblement nulle, c'est-à-dire qu'il n'y a pas de signal, il en conclut que la fibre de ligne est rompue en un point situé entre la sortie du laser de pompe et le coupleur et commande immédiatement l'interruption de l'émission du laser de pompe.

Ce procédé pose un certain nombre de problèmes.

En premier lieu, il ne tient pas compte des problèmes de bruit. Ainsi, même si la fibre de ligne est cassée, le bruit optique provenant par exemple de l'émission spontanée amplifiée (ASE pour Amplified Spontaneous Emission en anglais) et circulant dans la direction opposée à celle du signal utile, est tout de même transmis et peut avoir une puissance élevée. Par conséquent, il peut arriver que, même si la fibre de ligne est cassée, le signal prélevé au niveau du coupleur ait tout de même une puissance élevée, de sorte qu'il est impossible de détecter que la fibre de ligne est cassée.

En outre, ce procédé impose l'utilisation d'une partie du signal utile, ce qui diminue la puissance de ce dernier et entraîne donc une perte sur le signal.

Enfin, il nécessite l'emploi d'une fibre optique annexe.

On connaît un autre procédé permettant de détecter une cassure la fibre de ligne au voisinage du laser de pompe en s'affranchissant du problème du bruit. Ce procédé est fondé sur le principe de la perte de trame (LOF pour Loss Of Frame en anglais). Il consiste à détecter non pas une perte de puissance, mais l'absence de trame dans le signal prélevé ; en effet, le bruit optique n'a pas de trame spécifique, contrairement au signal utile.

Cependant, ce procédé est beaucoup plus complexe à mettre en oeuvre que le procédé fondé sur le principe du LOS et requiert un équipement spécifique qui n'est pas toujours disponible au niveau des interfaces du système de transmission.

La présente invention a donc pour but de mettre au point un procédé de sécurisation d'un système de transmission optique utilisant le principe du LOS tout en évitant les désavantages liés aux perturbations dues au bruit.

La présente invention propose à cet effet un procédé de sécurisation d'un système de transmission optique, ledit système comprenant :
- des moyens d'émission d'un signal optique utile
- des moyens de transmission, contenant une fibre optique de transmission, d'un signal optique contenant ledit signal optique utile ainsi que du bruit optique, pour former un signal optique dit transmis
- des moyens de prélèvement d'une partie dudit signal optique transmis, dit signal optique de surveillance
- des moyens d'analyse de la puissance dudit signal optique de surveillance pour en déduire une rupture de ladite fibre optique de transmission en fonction de la puissance dudit signal optique de surveillance,
ledit procédé étant **caractérisé en ce qu'**il consiste à isoler au sein dudit signal optique de surveillance, un premier signal ne contenant que ledit bruit d'une part, et un deuxième signal contenant à la fois ledit bruit et ledit signal utile d'autre part, et à comparer la puissance de ces deux signaux, pour en déduire une rupture de ladite fibre optique de transmission si le rapport de la puissance dudit deuxième signal sur la puissance dudit premier signal est sensiblement égal à 1.

Selon l'invention, en effectuant le rapport entre la puissance de deux signaux dont l'un contient le bruit seul, on s'affranchit du problème de l'art antérieur en isolant l'une de l'autre les deux composantes principales du signal, de sorte que s'il n'y a que du bruit dans le signal utile, on en déduit que la fibre de transmission est cassée.

De préférence, pour une sécurité accrue, on déduit une rupture de la fibre optique de transmission si le rapport de la puissance dudit deuxième signal sur la puissance dudit premier signal est inférieur ou égal à 2, et de préférence inférieur ou égal à 4.

Selon un mode de réalisation préféré de l'invention, des moyens de filtrage de chaque composante en longueur d'onde du signal optique de surveillance permettent d'isoler les composantes en longueur d'onde ne transmettant que du bruit optique de celles transmettant à la fois ledit signal utile et le bruit optique, et la puissance d'un signal porté par l'une des longueurs d'onde portant à la fois ledit signal utile et le bruit optique est comparée à la puissance d'un signal porté par l'une des longueurs d'onde ne portant que du bruit.

De manière avantageuse, la puissance de chacun des signaux portés par l'une des longueurs d'onde portant à la fois le signal utile et le bruit optique est comparée à la puissance d'un signal porté par l'une des longueurs d'onde ne portant que du bruit.

Ceci permet une fiabilité accrue du procédé selon l'invention puisque le bruit et le signal sont mesurés sur plusieurs canaux simultanément, de sorte qu'en cas de défaillance de l'un d'entre eux, une détection de rupture reste possible.

Avantageusement, les moyens de filtrage comprennent un démultiplexeur DWDM.

Avantageusement encore, les moyens de prélèvement comprennent un coupleur optique.

Selon un autre mode de réalisation préféré de l'invention, le signal de surveillance est transmis par les moyens de prélèvement à un photo-détecteur et le signal électrique issu dudit photo-détecteur est analysé à deux fréquences différentes pour isoler le signal électrique correspondant au bruit optique du signal électrique correspondant au signal utile et au bruit optique, et la puissance de ces deux signaux électriques est comparée.

Cet autre mode de réalisation de l'invention permet de mettre en oeuvre le procédé de l'invention dans le domaine électrique plutôt que dans le domaine optique.

L'invention concerne également un dispositif de sécurisation pour la mise en oeuvre du procédé précédent, comprenant :
- des moyens pour isoler, au sein dudit signal optique de surveillance, un premier signal ne contenant que ledit bruit d'une part, et un deuxième signal contenant à la fois ledit bruit et ledit signal utile d'autre part,
- des moyens de comparaison de la puissance de ces deux signaux, pour en déduire une rupture de ladite fibre optique de transmission si le rapport de la puissance dudit deuxième signal sur la puissance dudit premier signal est sensiblement égal à 1.

Pour la mise en oeuvre du procédé de sécurisation de l'invention, le dispositif selon l'invention peut en outre comprendre comprend des moyens pour commander l'interruption de l'émission de moyens d'émission d'un signal de pompe lorsque le rapport des puissances est sensiblement égal à 1.

Enfin, l'invention concerne un système de transmission optique sécurisé incorporant un dispositif de sécurisation selon l'invention.

D'autres caractéristiques et avantages de la présente invention apparaîtront dans la description suivante d'un mode de réalisation de l'invention, donné à titre illustratif et nullement limitatif.

Dans les figures suivantes :
- la figure 1 représente schématiquement un système de transmission optique sous-marin selon l'invention
- la figure 2 représente un mode de réalisation d'un dispositif de sécurisation selon l'invention appartenant au système de transmission de la figure 1, pour mettre en oeuvre le procédé de l'invention.

Dans toutes ces figures, les éléments communs portent les mêmes numéros de référence.

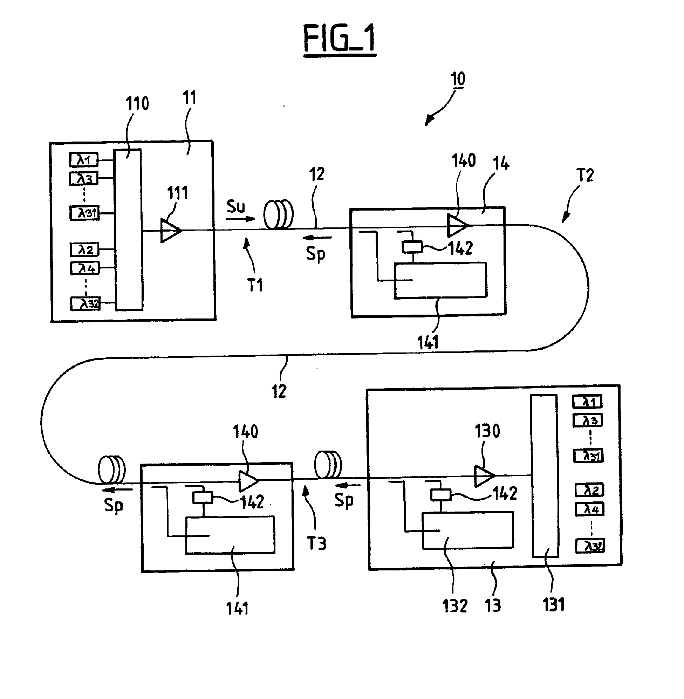

On voit en figure 1 un système 10 de transmission optique sous-marin sécurisé selon l'invention. Un système de transmission optique sous-marin comprend de manière générale une pluralité de tronçons dont trois, T1, T2 et T3, sont représentés en figure 1. On appelle tronçon la portion d'un système optique de transmission située entre deux dispositifs d'amplification du signal optique, appelés également répéteurs. Au sein d'un dispositif d'amplification du signal optique, le signal optique WDM (pour Wavelength Division Multiplexing en anglais) reçu est amplifié avant d'être ré-émis sur le tronçon suivant.

Le système 10 comprend :
- un émetteur 11 de signal optique WDM, c'est-à-dire formé de n signaux portés par n canaux distincts de longueurs d'onde respectives λ₁ à λₙ ; ces n signaux sont combinés au sein d'un multiplexeur 110 pour former le signal utile Sᵤ ; en sortie du démultiplexeur 110, on utilise de manière classique un amplificateur 111
- une fibre de ligne 12 pour transmettre le signale utile Sᵤ
- un récepteur 13 recevant le signal utile Sᵤ à l'autre extrémité du système de transmission 10 ; au sein du récepteur 13, le signal optique Su est amplifié au moyen d'un amplificateur 130 puis démultiplexé à l'aide d'un démultiplexeur 131 pour obtenir n signaux de longueurs d'onde λ₁ à λₙ ; le récepteur 13 comprend en outre un laser de pompe 132
- entre l'émetteur 11 et le récepteur 13, on trouve plusieurs dispositifs d'amplification 14 illustrés schématiquement ; chacun de ces dispositifs d'amplification 14 comprend un amplificateur 140 ainsi qu'un laser de pompe 141 envoyant dans la fibre de ligne 12 un signal de pompe Sₚ destiné à amplifier le signal utile Su soit par amplification à fibre optique dopée à l'erbium (auquel cas, des tronçons de telle fibre, non représentés, sont disposés à intervalle réguliers au sein de la fibre de ligne 12), soit par amplification distribuée de type Raman ; en outre, chacun des dispositifs d'amplification 14 comprend un dispositif de sécurisation 142 selon l'invention.

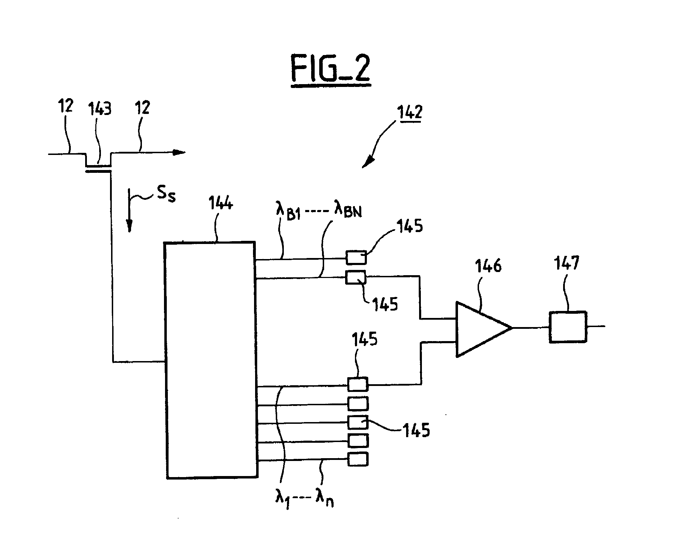

Le dispositif de sécurisation 142 selon l'invention ainsi que le procédé de sécurisation de l'invention vont maintenant être décrits plus en détail en relation avec la figure 2, qui représente plus spécifiquement un dispositif de sécurisation 142.

Le dispositif de sécurisation 142 comprend un coupleur optique (typiquement 10 : 1) 143 qui permet de prélever, sur la fibre de ligne 12, 10% du signal optique transmis par cette dernière. Ce signal optique dit de surveillance Sₛ, qui sert à la détection d'une éventuelle cassure de la fibre de ligne 12, contient notamment les canaux WDM multiplexés et portés par leurs longueurs d'onde respectives λ₁ à λₙ, mais également le bruit généré par les différents éléments du système, et notamment l'émission spontanée amplifiée provenant de l'amplification du signal Sᵤ. Le bruit est porté à la fois par les longueurs d'onde λ₁ à λₙ, auquel cas il est mélangé au signal porté par ces longueurs d'onde, et par des longueurs d'onde distinctes de celles du signal utile, notées ici λ_{B1} et λ_{BN}, où N est le nombre de longueurs d'onde ne portant pas le signal utile et sur lesquelles se décompose le bruit.

Le signal Sₛ est envoyé, selon l'invention, sur un démultiplexeur WDM 144 permettant d'isoler les uns des autres les n+N signaux contenus dans le signal Sₛ.

La puissance de chacun des signaux issus du démultiplexage est ensuite mesurée à l'aide de moyens de mesure 145 adaptés, puis au moins une sortie des moyens de mesure 145 donnant la puissance de l'un des signaux de longueur d'onde λ₁ à λₙ est comparée à l'aide de moyens de comparaison 146 à une sortie des moyens de mesure 145 donnant la puissance de l'un des signaux de bruit de longueur d'onde λ_{B1} à λ_{BN}.

Plus précisément, on fait le rapport R de la puissance de l'un des signaux de longueurs d'onde λ₁ à λₙ sur la puissance de l'un des signaux de bruit de longueur d'onde λ_{B1} à λ_{BN}.

Si ce rapport R est inférieur ou égal à 4, cela signifie que le canal portant le signal utile ne transporte que du bruit, et donc que la puissance du signal utile est nulle ; on en déduit que ce dernier est inexistant, et que par conséquent, la fibre de ligne 12 est cassée. Dans ce cas, des moyens de commande 147 envoient un signal au laser de pompe 141 pour interrompre son émission.

Si ce rapport R est supérieur à 4, cela signifie que le signal utile est transporté entre la sortie du laser de pompe 141 et le coupleur 143. Dans ce cas, la fibre optique de ligne 12 n'est pas cassée et il n'y a pas danger pour l'oeil humain.

On comprendra que la procédé de l'invention peut déjà être mis en oeuvre si le rapport R est sensiblement égal à 1 (c'est-à-dire compris entre 0,75 et 1,25), mais qu'il est préférable, pour plus de sécurité, de lui imposer une borne maximale plus élevée, par exemple égale à 2, ou mieux encore à 4.

Afin de fiabiliser encore la surveillance, et de s'affranchir d'une éventuelle défaillance sur l'un des canaux WDM, on peut effectuer simultanément la comparaison sur plusieurs longueurs d'onde λ₁ à λₙ avec l'une des longueurs d'onde λ_{B1} à λ_{BN}.

En outre, pour une meilleure précision de la mesure, on peut comparer la puissance des signaux WDM à la puissance de chacune des composantes portées par λ_{B1} à λ_{BN}.

Ainsi, le procédé selon l'invention permet de sécuriser les systèmes de transmission optique par la méthode LOS tout en s'affranchissant du problème du bruit optique.

En outre, il permet d'imposer un seuil de basculement (c'est-à-dire d'interruption du laser d'émission) requis pour obtenir la sécurité et la fiabilité souhaitées au sein du système de transmission selon l'invention.

Par ailleurs, contrairement au procédé de type LOS de l'art antérieur, le procédé de l'invention ne nécessite pas de fibre optique annexe.

Les pertes d'insertion du coupleur de prélèvement peuvent être compensées par une augmentation du gain de l'amplificateur 130 ou 140 situé après le dispositif de sécurisation de l'invention, alors que dans l'art antérieur, le prélèvement était effectué avant l'amplification distribuée dont le gain est fixe, d'où l'impossibilité de compenser les pertes d'insertion.

Enfin, il est nettement plus simple que les procédés fondés sur la méthode LOF de l'art antérieur.

Bien évidemment, l'invention n'est pas limitée au mode de réalisation qui vient d'être décrit.

Notamment, au lieu d'effectuer une détection optique, on peut effectuer une détection électrique du niveau du signal et du bruit. En d'autres termes, on effectue une détection de toutes les composantes du signal optique Sₛ au moyen d'un photo-détecteur. Le signal électrique issu de ce dernier est filtré en fréquence et l'on compare, par exemple pour un signal modulé à 2,5 Gbit/s, la puissance du signal à 1 GHz, représentant le signal utile et le bruit, avec celle du signal à 5 GHz, représentant l'ASE. Ici encore, si le résultat est voisin de 1 par exemple, on en déduit que la fibre de ligne 12 est cassée et l'on arrête l'émission du laser de pompe.

Par ailleurs, l'invention peut être mise en oeuvre au sein de tout système de transmission optique, et pas seulement les systèmes sous-marins de transmission optique.

De plus, elle peut être appliquée à la détection de cassures de la fibre optique non seulement au sein des dispositifs d'amplification, mais plus largement au niveau de n'importe quel dispositif comprenant une source d'émission optique de forte puissance, que cette source serve de laser de pompe ou de laser d'émission direct.

Enfin, on pourra remplacer tout moyen par un moyen équivalent sans sortir du cadre de l'invention.

## Revendications

1. Procédé de sécurisation d'un système de transmission optique, ledit système comprenant :
• des moyens d'émission (11) d'un signal optique utile (Sᵤ)
• des moyens de transmission, contenant une fibre optique de transmission (12), d'un signal optique contenant ledit signal optique utile (Sᵤ) ainsi que du bruit optique, pour former un signal optique dit transmis
• des moyens de prélèvement (143) d'une partie dudit signal optique transmis, dit signal optique de surveillance (Sₛ)
• des moyens d'analyse (145) de la puissance dudit signal optique de surveillance (Sₛ) pour en déduire une rupture de ladite fibre optique de transmission (12) en fonction de la puissance dudit signal optique de surveillance,
ledit procédé étant **caractérisé en ce qu'**il consiste à isoler au sein dudit signal optique de surveillance (Sₛ), un premier signal ne contenant que ledit bruit d'une part, et un deuxième signal contenant à la fois ledit bruit et ledit signal utile (Sᵤ) d'autre part, et à comparer (146) la puissance de ces deux signaux, pour en déduire une rupture de ladite fibre optique de transmission (12) si le rapport de la puissance dudit deuxième signal sur la puissance dudit premier signal est sensiblement égal à 1.

2. Procédé selon la revendication 1 **caractérisé en ce que** l'on déduit une rupture de ladite fibre optique de transmission (12) si ledit rapport est inférieur ou égal à 2, et de préférence inférieur ou égal à 4.

3. Procédé selon l'une des revendications 1 ou 2 **caractérisé en ce que** des moyens de filtrage (144) de chaque composante en longueur d'onde du signal optique de surveillance (Sₛ) permettent d'isoler les composantes en longueur d'onde ne transmettant que du bruit optique (λ_{B1}, ..., λ_{BN}) de celles (λ₁, ..., λₙ) transmettant à la fois ledit signal utile (Sᵤ) et le bruit optique, et la puissance d'un signal porté par l'une des longueurs d'onde (λ₁, ..., λₙ) portant à la fois ledit signal utile (Sᵤ) et le bruit optique est comparée à la puissance d'un signal porté par l'une des longueurs d'onde (λ_{B1}, ..., λ_{BN}) ne portant que du bruit.

4. Procédé selon la revendication 3 **caractérisé en ce que** la puissance de chacun des signaux portés par l'une des longueurs d'onde (λ₁, ..., λₙ) portant à la fois ledit signal utile et le bruit optique est comparée à la puissance d'un signal porté par l'une des longueurs d'onde (λ_{B1}, ..., λ_{BN}) ne portant que du bruit.

5. Procédé selon la revendication 3 **caractérisé en ce que** lesdits moyens de filtrage comprennent un démultiplexeur DWDM (144).

6. Procédé selon l'une des revendications 3 ou 4 **caractérisé en ce que** lesdits moyens de prélèvement comprennent un coupleur optique (143).

7. Procédé selon l'une des revendications 1 ou 2 **caractérisé en ce que** ledit signal de surveillance est transmis par lesdits moyens de prélèvement à un photo-détecteur et le signal électrique issu dudit photo-détecteur est analysé à deux fréquences différentes pour isoler le signal électrique correspondant au bruit optique du signal électrique correspondant au signal utile, et la puissance de ces deux signaux électriques est comparée.

8. Dispositif de sécurisation pour la mise en oeuvre du procédé selon l'une des revendications 1 à 7, caractérisé en que qu'il comprend :
• des moyens (144) pour isoler, au sein dudit signal optique de surveillance (Sₛ), un premier signal ne contenant que ledit bruit d'une part, et un deuxième signal contenant à la fois ledit bruit et ledit signal utile (Sᵤ) d'autre part,
• des moyens de comparaison (146) de la puissance desdits premier et deuxième signaux, pour en déduire une rupture de ladite fibre optique de transmission (12) si le rapport de la puissance dudit deuxième signal sur la puissance dudit premier signal est sensiblement égal à 1.

9. Dispositif selon la revendication 8 **caractérisé en ce qu'**il comprend des moyens (147) pour commander l'interruption de l'émission de moyens d'émission (141) d'un signal de pompe (Sₚ) lorsque ledit rapport est sensiblement égal à 1.

10. Système de transmission optique **caractérisé en ce qu'**il comprend un dispositif selon l'une des revendications 8 ou 9.
